(19) Europäisches Patentamt
European Patent Office
Office européen des brevets

(11) Publication number : 0 564 259 A2

# (12) EUROPEAN PATENT APPLICATION

(21) Application number : 93302502.5

(22) Date of filing : 30.03.93

(51) Int. Cl.⁵ : C08K 5/13, C08K 5/20, C08L 75/04

(30) Priority : 30.03.92 US 860376

(43) Date of publication of application : 06.10.93 Bulletin 93/40

(84) Designated Contracting States : BE DE FR GB IT NL

(71) Applicant : ARCO CHEMICAL TECHNOLOGY INC.
3 Christina Centre Suite 902 201 N Walnut Street
Wilmington Delaware 19801 (US)

(72) Inventor : Hinney, Harry R.
27 Hidden Cave
Cross Lanes, West Virginia 25313 (US)
Inventor : Pazos, Jose F.
918 Ridgeway Road
Charleston, West Virginia 25314 (US)
Inventor : Gunton, Catherine I.
208 Bradford Street
Charleston, West Virginia 25311 (US)

(74) Representative : Cropp, John Anthony David et al
MATHYS & SQUIRE 10 Fleet Street
London, EC4Y 1AY (GB)

## (54) Stabilized polyurethane foam.

(57) Polyurethane foam formulations comprising polyhydric phenols as foam stabilizers are disclosed. The incipient polyurethane foams resist collapse and the resulting cured foams exhibit excellent mechanical properties.

EP 0 564 259 A2

This invention relates to a new class of foam stabilizer for polyurethane foam formulations.

In one of its more specific aspects, this invention pertains to the use of polyhydric phenols in water blown polyurethane foam formulations to stabilize the incipient foams against collapse. Moreover, the use of these polyhydric phenols imparts improved tensile, tear, elongation, and load properties to the resulting fully cured foams.

The need to reduce or eliminate the use of CFC's in the manufacture of polyurethane foams resulted in the quick development and commercialization of foam formulations which can be all- or substantially all-water blown. Many of these early foam formulations sacrificed foam properties for water blowing capability. Now that CFC-free foams have been commercially accepted, the polyurethane industry's emphasis has shifted to improving the foam properties of these early water blown foams.

Any scientific attempt to improve upon these early water blown foam formulations must begin with a study of the function of each component of the foam formulation and come to a determination of whether the use of a particular component adversely affects foam properties. This invention resulted from such a study which found that conventional foam stabilizers were adversely affecting the mechanical properties of water blown foams.

More specifically, this invention resulted from a finding that foam stabilizers commonly used in CFC blown foams such as, diethanolamine (DEOA), were adversely affecting the mechanical properties, particularly tensile and tear strength, of foams produced from water blown foam formulations. As a result of this finding, a new foam stabilizer was sought which would eliminate the mechanical property deficiencies attributed to the use of the prior art foam stabilizers in water blown foam formulations. This invention provides a new class of polyhydric phenol stabilizers which when used in water blown polyurethane foam formulations result in foams which exhibit enhanced mechanical properties.

According to this invention, there is provided a polyurethane foam formulation comprising a foam stabilizer of the general formula

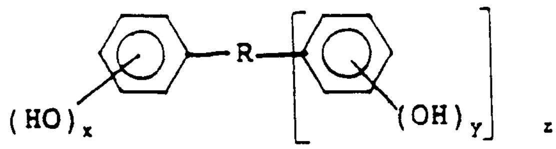

wherein R represents H, poly(alkyleneoxy), alkyl or substituted alkyl, aryl, aralkyl, or carbonyl groups, X is 0-4, Y is 0-4, X + Y ≧ 2, and Z is 0-6 or higher.

Suitable foam stabilizers of the above general formula to produce the polyurethane formulations and foams of this invention include catechol, pyrogallol, the class of phenol/formaldehyde resins known as Novolac resins, 1,1,1-tris(4-hydroxyphenyl) ethane, N,N-bis(2-hydroxyethyl)-4-hydroxybenzamide, polyhydroxybenzophenones containing 2 to 4 hydroxyl groups (for example, 4,4'-dihydroxybenzophenone and 2,2'4,4'-tetrahydroxybenzophenone), alkyl (poly) esters of (poly)hydroxybenzoic acids [for example, trimethylolpropane tris(4-hydroxybenzoate) and glyceryl bis(2,4-dihydroxybenzoate)], and polyether polyol esters of (poly)hydroxybenzoic acids [for example, propoxylated glycerol [M.W. ~200-15,000] tris(2-hydroxybenzoate) and propoxylated sorbitol [M.W. ~400-15,000]bis (2,4-dihydroxybenzoate)].

The amount of stabilizer of the invention employed in a polyurethane foam formulation can vary within a wide range and is best defined as the amount effective to stabilize the resulting cured foam against collapse. Amounts as little as 0.5 part per 100 parts of polyol have been found effective. A general range would be from about 0.5 to about 10 parts per 100 parts of polyol. A preferred range would be from about 1 to about 5 parts.

In one embodiment, the foam stabilizers of the invention are chemically bound to a polyol and incorporated into foam formulations in that form. Chemically bound stabilizers serve to avoid certain potential problems often attributed to the use of unbound stabilizers such as migration, odor, staining, toxicity concerns, and the like. The most straightforward approach to chemically bond the stabilizer to a polyol is to derivatize (for example, transesterify) the polyol, via its hydroxyl groups, with a suitable stabilizer moiety. Example 9 provides a demonstration of this embodiment.

In its preferred embodiment, the foam stabilizer of this invention is employed to stabilize polyurethane foams made using a blowing agent consisting mainly or entirely of water. By employing a blowing agent consisting mainly of water is meant that the amount of other blowing agent present, if any, is less than its equivalent of the amount of water present, in terms of blowing capacity. For example, 1 part by weight of water has the equivalent blowing capacity of about 10 parts by weight of CFC 11. Thus, if CFC 11 is used in conjunction with water, the weight ratio of water to CFC 11 must be greater than 1:10. Preferably, the blowing agent is free or substantially free of chlorofluorocarbon.

The stabilizer of the invention will be employed in a polyurethane formulation which contains at least one each of the following essential components: a polyhydroxyl component, a polyisocyanate component, catalyst, surfactant, and blowing agent.

Any suitable polyisocyanate or polyisocyanate mixture may be employed as the polyisocyanate component. Particularly suitable for use in this invention are the following polyisocyanate mixtures: (1) a mixture of 80% 2,4-tolylenediisocyanate with 20% 2,6-tolylenediisocyanate; and (2) a mixture of 65% 2,4-tolylenediisocyanate with 35% 2,6-tolylenediisocyanate.

The polyisocyanate component will be employed in an amount to provide an isocyanate index of from about 70 to 120 (i.e. from 0.7 times stoichiometric to 1.2 times stoichiometric). Preferably the index will be from about 0.8 to 1.1 times stoichiometric and, most preferably 0.8 to 0.95 times stoichiometric.

The polyhydroxyl component will comprise one or more suitable organic polyhydroxyl compounds. Suitable polyhydroxyl compounds or polyols are well known in the art, commercially available, and include polyether polyols, simple alkane polyols, polyester polyols, and graft polymer dispersions in polyols also known as polymer polyols, and the like and their mixtures. The selection of a suitable polyol or polyol mixture can vary within wide limits and is mainly dependent on the type of polyurethane foam desired, inasmuch as the stabilizers of this invention are effective to stabilize a wide variety of cured polyurethane foams against collapse. A representative variety of polyols and polyol mixtures suitable for use in the practice of this invention is described in detail in U.S. Pat. No. 5,011,908 to Hager, and all are incorporated herein by reference.

Any suitable polyurethane catalyst can be employed in conventionally employed amounts of from about 0.001 to about 2 php or more. Preferred catalysts are the amine catalysts such as A-1, C-183, or U3000 tertiary amine catalysts, all commercially available from Union Carbide Chemicals and Plastics Company. Also suitable are the tin catalysts such as dibutyl tin dilaurate and blends of tin and amine catalysts.

Likewise, any suitable conventional polyurethane surfactant, preferably a silicone surfactant, can be employed in art-recognized amounts of from about 0.001 to about 5 php or more. Particularly suitable silicone surfactants are designated U2000 Surfactant and DC5043 Surfactant, commercially available from Union Carbide Chemicals and Plastics Company and Dow Corning, respectively.

Other optional components of the polyurethane foam formulations of this invention include flame retardants such as the organo(chlorophosphate) flame retardants and melamine. If employed, these other components are employed in art-recognized amounts.

The invention is further demonstrated by the following examples in which all parts are by weight and are based on the total amount of polyol employed in each foam formulation being 100 parts. The abbreviation php means parts per each 100 parts of polyol. In the following Tables density units are pounds per cubic foot, (pcf); tensile units are pounds per square inch, (psi); tear units are pounds per linear inch, (pli); and elongation units are expressed in % elongation at break. All tests were conducted following the test methods set out in ASTM D-3574.

EXAMPLE 1

(Standard Foam Formulation)

For purposes of demonstrating the effectiveness of the stabilizers of the invention, a typical water blown flexible polyurethane foam formulation was selected. The formulation components and amounts of components are shown below:

STANDARD FOAM FORMULATION

| Component | Amount (php) |
|---|---|
| Polyol[1] | 100.0 |
| DEOA Stabilizer | 3.0 |
| Catalyst[2] | 0.24 |
| Surfactant[3] | 1.0 |
| Flame Retardant[4] | 2.0 |
| Polyisocyanate[5] | 41.67 |
| Blowing Agent (Water) | 3.8 |

---

1 ULTRACEL™ 2000 Polyol, commercially available from ARCO Chemical Company. ULTRACEL™ Polyol is a polyol-polymer/polyol mixture having a hydroxyl number of about 31.

2 A mixture of 0.2 php U3000 amine catalyst and 0.04 php T-12 catalyst which is predominantly dibutyl tin dilaurate.

3 U2000 silicone surfactant available from Union Carbide Chemicals and Plastics Company.

4 Thermolin 101 organo(chlorophosphate) available from Olin Corporation.

5 80/20 TDI isocyanate index = 85.

EXAMPLES 2-8

Seven fully cured polyurethane foams were prepared using the Standard Foam formulation but with the substitution of the prior art DEOA stabilizer with the indicated stabilizer of this invention. The parts of each stabilizer employed were adjusted to obtain the same equivalents as DEOA, except for the THPE. The mechanical properties of each resulting fully cured foam were tested and are compared to the mechanical properties of the fully cured foam prepared using DEOA in Table I below.

TABLE I

MECHANICAL PROPERTIES OF FOAMS WITH VARIOUS STABILIZERS

| Example No. | 1 | 2 | 3 | 4 | 5 | 6 | 7 | 8 |
|---|---|---|---|---|---|---|---|---|
| Stabilizer | DEOA | THBP | Catechol | Pyrogallol | THPE | 2,2'-DHBP | 4,4'-DHBP | 2,4-DHBP |
| php | 3.0 | 5.3 | 4.7 | 3.6 | 1.4 | 4.6 | 4.6 | 4.6 |
| density (pcf) | 1.78 | 2.18 | 2.02 | 2.03 | 1.98 | 1.79 | 1.84 | 1.82 |
| tensile (psi) | 11.45 | 14.06 | 15.75 | 14.41 | 14.00 | 13.05 | 14.73 | 15.15 |
| tear (pli) | 0.85 | 1.50 | 1.44 | 1.37 | 1.26 | 1.24 | 1.52 | 1.35 |
| elongation (%) | 137.00 | 146.89 | 135.92 | 140.44 | 149.48 | 108.98 | 123.95 | 125.36 |

DEOA = diethanolamine
THBP = 2,2',4,4'-tetrahydroxybenzophenone
THPE = tris(4-hydroxyphenyl) ethane
DHBP = dihydroxybenzophenone

The mechanical property data of Table I illustrate that fully cured polyurethane foams stabilized with the various polyhydric phenol stabilizers of this invention exhibit significantly enhanced tensile strengths and better

tear strengths as compared to the foam stabilized with DEOA. Elongation remained substantially unchanged.

EXAMPLE 9

This example demonstrates the preferred embodiment of using a chemically bound stabilizer. A polyurethane foam was prepared using the Standard Polyurethane Foam Formulation, but with the substitution of 2.4 php of a chemically bound methyl 2,4-dihydroxybenzoate stabilizer for the 3.0 php of DEOA stabilizer. The chemically bound methyl 2,4-dihydroxybenzoate stabilizer was prepared by transesterifying the polyol portion of the ULTRACEL™ 2000 Polyol with an equivalent amount (2.4 php) of methyl 2,4-dihydroxybenzoate stabilizer. Table II shows a comparison of the mechanical properties of the fully cured foam of Example 1 (prior art unbound stabilizer) with the fully cured foam of this example employing a chemically bound stabilizer.

TABLE II

| MECHANICAL PROPERTIES OF FOAM EMPLOYING CHEMICALLY BOUND STABILIZER | | |
|---|---|---|
| Example No. | 1 | 9 |
| Stabilizer | DEOA | Chemically Bound Stabilizer |
| php | 3.0 | 2.4 |
| tensile | 11.45 | 11.71 |
| tear | 0.85 | 1.55 |
| elongation | 137.00 | 141.33 |

As shown in Table II, all mechanical properties of the foam produced using the chemically bound stabilizer are improved as compared to the standard foam produced using DEOA.

EXAMPLES 10-13

A series of five fully cured foams was prepared to demonstrate the effect of the level of stabilizer of the invention on foam properties. The stabilizer selected was 2,2',4,4'-tetrahydroxybenzophenone (THBP). The first foam in the series is the foam of Example 2.

TABLE III

| EFFECT OF THBP STABILIZER LEVEL ON FOAM PROPERTIES | | | | | |
|---|---|---|---|---|---|
| Example No. | 2 | 10 | 11 | 12 | 13 |
| THBP Stabilizer (php) | 5.30 | 3.98 | 1.33 | 0.53 | 0.53 |
| density | 2.18 | 2.12 | 1.84 | 1.93 | 1.96 |
| tensile | 14.06 | 11.83 | 11.05 | 14.10 | 11.74 |
| tear | 1.50 | 1.27 | 1.21 | 1.26 | 1.21 |
| elongation | 146.89 | 142.66 | 142.51 | 173.02 | 164.36 |

The data in Table III show that the THBP stabilizer of the invention may be used at levels as low as 0.53 php or less. Further shown is that although lowering the level of THBP from 5.3 to 3.98 php decreases both tensile and tear strength somewhat (from 1.50 to 1.27 pli), no further reduction in these properties occurs at levels lower than 3.98 php. As can be further seen from Table III, even at low levels (10% of DEOA on an equivalent basis), THBP effectively stabilizes incipient foams and results in significantly improved tear strength.

EXAMPLES 14-16

Another series of three fully cured foams was prepared to evaluate the effect of the level of stabilizer on foam mechanical properties. In this series, the stabilizer selected was dihydroxybenzophenone (DHBP). A comparison of Examples 6, 7 and 8 in Table I with Examples 14, 15 and 16 shows the effect of decreasing the amount of DHBP from 4.6 to 2.3 php as further compared to an equal amount of THBP (Example 11), also a stabilizer of the invention.

TABLE IV

| EFFECT OF DHBP STABILIZER LEVEL ON FOAM PROPERTIES | | | | |
|---|---|---|---|---|
| Example No. | 11 | 14 | 15 | 16 |
| Stabilizer | TBHP | 2,2'-DHBP | 4,4'-DHBP | 2,4-DHBP |
| php | 1.33 | 2.3 | 2.3 | 2.3 |
| density | 1.84 | 1.93 | 1.88 | 1.89 |
| tensile | 11.05 | 14.48 | 13.94 | 13.17 |
| tear | 1.21 | 1.52 | 1.36 | 1.39 |
| elongation | 142.51 | 127.64 | 128.30 | 120.89 |

The above data show that decreasing the level of DHBP from 4.6 to 2.3 php did not affect the mechanical properties of the resulting foams. Moreover, even though the DHBP's are of lower functionality than the THBP stabilizer (Example 11) to which they are compared, all of the DHBP's effectively stabilized the incipient foams and resulted in significant improvements in tensile and tear strengths as compared to DEOA.

EXAMPLES 17-21

A series of five foams was prepared to evaluate the ability of a stabilizer of the invention (THBP) to perform at various water levels.

TABLE V

| EFFECT OF WATER LEVEL ON THBP STABILIZED FOAMS | | | | | |
|---|---|---|---|---|---|
| Example No. | 17 | 18 | 19 | 20 | 21 |
| Water (php) | 4.10 | 4.70 | 5.30 | 5.90 | 6.50 |
| THBP Stabilizer (php) | 1.33 | 1.33 | 1.33 | 1.33 | 5.30 |
| density | 1.72 | 1.46 | 1.35 | 1.21 | 1.25 |
| tensile | 12.72 | 13.22 | 12.02 | 12.25 | 11.25 |
| tear | 1.33 | 1.31 | 1.68 | 1.78 | 1.59 |
| elongation | 160.16 | 173.22 | 138.62 | 130.30 | 91.78 |

The data of Table V show that tear strength increases as water level is increased, whereas elongation decreases with increasing water levels. Tensile strength appears to be independent of water level. An increase in THBP level from 1.33 to 5.30 parts was required to stabilize Example 21 (6.5 parts water). However, no attempt was made to adjust catalyst, surfactant, etc. levels in the foam formulation.

EXAMPLES 22-24

A series of three foams was prepared using a foam formulation identical to the Standard Foam Formulation but the ULTRACEL™ 2000 Polyol was replaced with 100.0 php of ARCOL® E-514 Polyol, a lower functionality polyol having a hydroxyl number of about 29.

TABLE VI

| EFFECT OF DIFFERENT POLYOL ON THBP STABILIZED FOAMS | | | |
|---|---|---|---|
| Example No. | 22 | 23 | 24 |
| THBP Stabilizer (php) | 5.30 | 3.98 | 2.65 |
| density | 2.25 | 1.92 | 1.87 |
| tensity | 19.55 | 19.56 | 17.54 |
| tear | 2.97 | 2.72 | 2.31 |
| elongation | 198.05 | 255.07 | 215.98 |

The data in Table VI shows that the THBP stabilizer of the invention is even more effective with ARCOL® E-514 polyol.

It will be evident from the foregoing that various modifications can be made to this invention. Such, however, are considered as being within the scope of the invention.

**Claims**

1. A polyurethane foam-forming formulation comprising a foam stabilizer selected from
   (a) compounds of the general formula

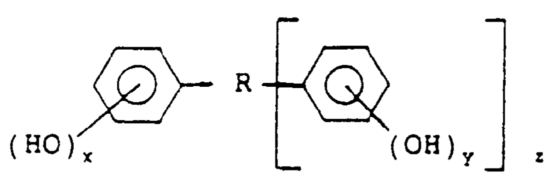

   wherein R represents H, poly(alkylenoxy), alkyl or substituted alkyl, aryl, aralkyl, or carbonyl groups, x is 0-4, Y is 0-4, x + Y ≧ 2, and Z is 0-6;
   (b) mono and poly hydroxybenzoic and polyhydroxybenzoic acid esters of mono and polyhydric alcohols, said esters having at least two phenolic hydroxyl groups, and
   (c) N,N-bis(2-hydroxyethyl)-4-hydroxybenzamide

2. A foam-forming formulation as claimed in claim 1 comprising a polyhydroxyl component, a polyisocyanate component, a catalyst, a surfactant, and a blowing agent, in addition to the stabilizer.

3. A foam-forming formulation as claimed in claim 2 in which the blowing agent is free or substantially free of chlorofluorocarbon.

4. A foam-forming formulation as claimed in claim 2 or claim 3 in which the blowing agent consists mainly or entirely of water.

5. A foam-forming formulation as claimed in any one of claims 1 to 4 in which the foam stabilizer is present

in an amount of from about 0.5 to about 10 parts per each 100 parts of polyhydroxyl component.

6. A foam-forming formulation as claimed in any one of claims 1 to 5 in which the foam stabilizer is chemically bound to a polyol.

7. A polyurethane foam stabilized against collapse and produced from a polyurethane foam-forming formulation as claimed in any one of claims 1 to 6.

8. A method of stabilizing an incipient polyurethane foam against collapse which method comprises incorporating in a polyurethane foam-forming formulation prior to foaming, a foam stabilizer selected from
(a) compounds of the general formula

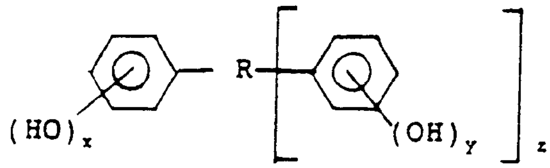

where R represents H, poly(alkylenoxy), alkyl or substituted alkyl, aryl, aralkyl, or carbonyl groups, x is 0-4, Y is 0-4, x + Y ≧ 2, and z is 0-6;
(b) mono and poly hydroxybenzoic and polyhydroxybenzoic acid esters of mono and polyhydric alcohols, said esters having at least two phenolic hydroxyl groups, and
(c) N,N-bis(2-hydroxyethyl)-4-hydroxybenzamide.

9. A method as claimed in claim 8 in which the formulation comprises a polyhydroxyl component, a polyisocyanate component, a catalyst, a surfactant, and a blowing agent.

10. A method as claimed in claim 9 in which the blowing agent is free or substantially free of chlorofluorocarbon.

11. A method as claimed in claim 9 or claim 10 in which the blowing agent consists mainly or entirely of water.

12. A method as claimed in any one of claims 8 to 11 in which the foam stabilizer is chemically bound to a polyol.

13. A foam-forming formulation as claimed in any one of claims 1 to 7 or a method as claimed in any one of claims 8 to 12 characterised in that said stabilizer is selected from catechol, pyrogallol, the class of phenol/formaldehyde resins known as Novolac resins, 1,1,1-tris(4-hydroxyphenyl) ethane, N,N-bis(2-hydroxyethyl)-4-hydroxybenzamide, polyhydroxybenzophenones containing 2 to 4 hydroxyl groups (for example, 4,4'-dihydroxybenzophenone and 2,2'4,4'-tetrahydroxybenzophenone), alkyl (poly) esters of (poly)hydroxybenzoic acids [for example, trimethylolpropane tris(4-hydroxybenzoate) and glyceryl bis(2,4-dihydroxybenzoate)], and polyether polyol esters of (poly)hydroxybenzoic acids [for example, propoxylated glycerol [M.W. ~400-15,000] bis(2,4-dihydroxybenzoate)].